# EUROPÄISCHE PATENTSCHRIFT

(11) **EP 3 048 396 B1**
(45) Veröffentlichungstag und Bekanntmachung des Hinweises auf die Patenterteilung: **26.06.2019**
(21) Anmeldenummer: 15192344.8
(22) Anmeldetag: 30.10.2015
(51) Int. Cl.: F25D 23/06, E04B 1/78, F16L 59/065

(54) **VORRICHTUNG UND VERFAHREN ZUM PARALLELEN EVAKUIEREN MEHRERER VAKUUMDÄMMKÖRPER**
DEVICE AND METHOD FOR EVACUATING A PLURALITY OF VACUUM CAVITY BODIES IN PARALLEL
DISPOSITIF ET PROCEDE D'EVACUATION PARALLELE DE PLUSIEURS CORPS D'ISOLATION PAR LE VIDE

(30) Priorität: 22.01.2015 DE 102015000761; 24.06.2015 DE 102015008162
(43) Veröffentlichungstag der Anmeldung: 27.07.2016
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: Hiemeyer, Jochen, 97753 Karlstadt (DE); Freitag, Michael, 97082 Würzburg (DE); Kerstner, Martin, 97072 Würzburg (DE)
(74) Vertreter: Herrmann, Uwe

(56) Entgegenhaltungen:
- EP-A1- 0 619 230
- WO-A1-98/29309
- JP-A- H10 131 333
- US-A- 5 327 703

## Beschreibung

Die vorliegende Erfindung betrifft eine Vorrichtung sowie ein Verfahren zum parallelen Evakuieren mehrerer Vakuumdämmkörper.

Vakuumdämmkörper finden beispielsweise Verwendung bei der Wärmedämmung in Kühl- bzw. Gefriergeräten, wobei diese in einem Bereich zwischen dem Außenmantel des Gerätes und dem zu kühlenden Innenbehälter angeordnet werden. Aufgrund des Prinzips der Vakuumwärmedämmung ist es möglich zwischen Außen- und Innenseite des zu dämmenden Gerätes eine ausreichend hohe Wärmedämmung zu erlangen.

Bei der Herstellung von Vakuumdämmkörpern in größerer Stückzahl ist die Verwendung einer Vakuumkammer Stand der Technik. Hierbei wird der Großteil des Fertigungsvorgangs des Vakuumdämmkörpers in einem vakuumierten Raum vollzogen.

Nachteilhaft an der Herstellung von Vakuumdämmkörpern in einer Vakuumkammer sind jedoch die beträchtlichen Betriebskosten sowie die voluminösen Ausmaße einer Vakuumkammer. Zudem ist man bei einer Fertigung innerhalb einer Vakuumkammer bezüglich der Freiheitsgrade bei der Formgebung des Vakuumdämmkörpers beschränkt.

Ebenfalls Stand der Technik ist es, einen vakuumierten Zustand des Vakuumdämmkörpers mit Hilfe eines Evakuiervorgangs über einen Evakuierstutzen, der an dem Vakuumdämmkörper angeordnet ist, durchzuführen. Hierbei wird eine Vakuumiervorrichtung mit dem Evakuierstutzen des Vakuumdämmkörpers in Verbindung gebracht, wodurch in dem Vakuumdämmkörper befindliche Gasmoleküle abgezogen werden.

Bei der Evakuierung mit Hilfe eines Evakuierstutzens sind jedoch deutlich längere Evakuierzeiten notwendig als bei einem Evakuiervorgang in der Vakuumkammer. Dies ist darauf zurückzuführen, dass alle in dem Vakuumdämmkörper vorhandenen Luftteilchen durch das Innere des Vakuumdämmkörpers zum Evakuierstutzen gelangen müssen, um von dort aus dem Vakuumdämmkörper abgezogen werden zu können.

Typischerweise befindet sich im Inneren eines Vakuumdämmkörpers ein sogenanntes Kernmaterial, das in einem vakuumierten Zustand des Vakuumdämmkörpers verhindert, dass sich die Innenwandungen des Vakuumdämmkörpers aneinander legen. Bei einer solchen Konfiguration müssen jedoch sämtliche oder ein Großteil der Luftteilchen (bewegliche Gasmoleküle) in dem Vakuumdämmkörper über einen Evakuierstutzen abgezogen werden. Das in dem Vakuumdämmkörper vorhandene Kernmaterial, das über den atmosphärischen Druck komprimiert ist, wirkt hierbei der Bewegung der Gasmoleküle in Richtung des Evakuierstutzens entgegen und führt zu einem insgesamt längeren Evakuiervorgang. WO98/29309A1 offenbart eine solche Vorrichtung gemäß dem Oberbegriff des Anspruchs 1.

Aus den vorgenannten Gründen kann für einen eine wirksame Dämmwirkung ergebenden Druck ein Evakuiervorgang von mehreren Stunden notwendig sein. Dies stellt einen nicht zu vernachlässigenden Faktor bei der Fertigung eines Vakuumdämmkörpers beziehungsweise eines den Vakuumdämmkörper enthaltenden Kühl- oder Gefriergeräts dar.

Diese Überlegungen sind nicht auf Kühl- und/oder Gefriergeräte beschränkt sondern gelten für wärmeisolierte Behältnisse im Allgemeinen.

Der vorliegenden Erfindung liegt demnach die Aufgabe zu Grunde, eine Vorrichtung sowie ein Verfahren zu schaffen, bei dem ein Evakuiervorgang eines Vakuumdämmkörpers über einen Evakuierstutzen für eine Vielzahl von zu vakuumierenden Vakuumdämmkörpern in einer effektiven und ressourcenschonenden Art und Weise durchgeführt werden kann.

Diese Aufgabe wird durch die Vorrichtung nach Anspruch 1 und das Verfahren nach Anspruch 5 zum parallelen Evakuieren mehrerer Vakuumdämmkörper gelöst.

Nach Anspruch 1 ist hierzu eine Vorrichtung vorgesehen, die mehrere Evakuierplätze aufweist, von denen jeder mit einer Evakuierkupplung zum Aufsetzen auf einen Evakuierstutzen eines zu evakuierenden Vakuumdämmkörpers, einer Evakuierleitung, die sich von der Evakuierkupplung erstreckt, und einen Druckschalter, der mit der Evakuierleitung verbunden ist, versehen ist. Ferner umfasst die Vorrichtung ein erstes Unterdrucksystem, das mit den mehreren Druckschaltern der mehreren Evakuierplätze verbunden ist und dazu fähig ist, ein Vakuum mit einem ersten Druckniveau zu erzeugen, und ein zweites Unterdrucksystem, das mit den mehreren Druckschaltern der mehreren Evakuierplätze verbunden ist und dazu fähig ist, ein Vakuum mit einem zu dem ersten Druckniveau verschiedenen zweiten Druckniveau zu erzeugen. Darüber hinaus ist der mit den beiden Unterdrucksystemen verbundene Druckschalter eines jeden Evakuierplatzes dazu ausgebildet, die Evakuierleitung zwischen dem ersten Unterdrucksystem und dem zweiten Unterdrucksystem umzuschalten.

Als Evakuierkupplung wird jedes Element angesehen, mit Hilfe dessen eine Öffnung eines Vakuumdämmkörpers in der Art verbunden werden kann, sodass eine vakuumdichte Verbindung zwischen Kupplung und Öffnung entsteht. Da ein zu evakuierender Vakuumdämmkörper typischerweise eine zur Evakuierung vorgesehene Öffnung in Form eines Evakuierstutzens umfasst, entspricht die Evakuierkupplung einem hierzu passenden Gegenstück.

Die sich von der Evakuierkupplung erstreckende Evakuierleitung ist dazu ausgelegt, die aus dem Vakuumdämmkörper abgezogenen Gasmoleküle abzusaugen. Dabei ist die Evakuierleitung mit dem Evakuierstutzen so verbunden, dass durch den Evakuierstutzen strömendes Gas von der Evakuierleitung vollständig aufgenommen wird. Die Evakuierleitung kann hierfür eine starre oder eine flexible Form aufweisen. Es ist jedoch genauso denkbar, dass die Evakuierleitung eine Kombination aus einer flexiblen und starren Form ist.

Darüber hinaus enthält jeder Evakuierplatz einen Druckschalter, der mit einem ersten Unterdrucksystem, einem zweiten Unterdrucksystem und der Evakuierleitung verbunden ist. Der Druckschalter ist dazu ausgelegt, die Evakuierleitung mit genau einem der beiden Unterdrucksysteme zu verbinden. Darüber hinaus kann jeder Druckschalter an jedem Evakuierplatz eine Umschaltung zwischen dem ersten und dem zweiten Unterdrucksystem vornehmen. Dies bedeutet, dass die Evakuierleitung je nach Stellung des Druckschalters mit dem ersten Unterdrucksystem oder dem zweiten Unterdrucksystem in einer Strömungsverbindung steht. Während der Druckschalter die Evakuierleitung mit einem der beiden Unterdrucksysteme verbindet besteht keine Verbindung zu dem anderen Unterdrucksystem. Es gibt keinen Zustand des Druckschalters, indem beide Unterdrucksysteme gleichzeitig mit der Evakuierleitung in Verbindung stehen.

Die beiden voneinander verschiedenen Druckniveaus der Unterdrucksysteme führen dazu, dass mit den beiden Unterdrucksystemen ihrem Druckniveau entsprechende Vakuumniveaus erlangt werden können. Ein geringerer Druck des Unterdrucksystems führt zu einem besseren Vakuum im Vakuumdämmkörper als ein Unterdrucksystem mit einem höheren Druck.

Durch die vorgenannte Vorrichtung ist es möglich, dass ein zu evakuierender Vakuumdämmkörper zuerst mit Hilfe eines ersten Unterdrucksystems auf ein bestimmtes Vakuumniveau gebracht wird und im Anschluss daran durch Umschalten des Druckschalters mit Hilfe eines zweiten Unterdrucksystems auf ein feineres Vakuumniveau gebracht wird.

Würde man die mehreren Vakuumdämmkörper unmittelbar an ein Unterdrucksystem ansetzen, dass das Innere des Vakuumdämmkörpers in einem Schritt auf ein gewünschtes Vakuumniveau bringen kann, sind die hierfür notwendigen Ressourcen besonders hoch. Dies liegt zum einen daran, dass ein solches Unterdrucksystem bei einem parallelen Anhängen mehrerer Vakuumdämmkörper eine ausreichend hohe Kapazität benötigt und zum anderen trotzdem derart ausgeführt sein muss, dass ein in dem Vakuumdämmkörper gewünschtes Vakuumniveau erreicht werden kann. Ein zeitlich nicht synchrones Ankoppeln von nicht evakuierten Vakuumdämmkörpern würde zudem zu einer verlängerten Evakuierdauer aller gerade zu evakuierenden Vakuumdämmkörper führen.

Die Erfindung nach Anspruch 1 zeigt, dass diese Nachteile in einer effektiven Art und Weise durch den Gegenstand nach Anspruch 1 überwunden werden können. Hierbei werden die mehreren zu evakuierenden Vakuumdämmkörper erst mit Hilfe eines ersten Unterdrucksystems auf ein bestimmtes Vakuumniveau evakuiert und im Anschluss daran durch Umschalten des Druckschalters auf ein gewünschtes Vakuumniveau mit Hilfe des zweiten Unterdrucksystems gebracht. Da das zweite Unterdrucksystem nun nur noch einen sehr viel geringeren Anteil von Gasmolekülen evakuieren muss, kann die gesamte Auslegung des zweiten Unterdrucksystems im Vergleich zu einem einzigen Unterdrucksystem bedeutend verringert werden. Zu beachten ist hierbei auch, dass mit einer steigenden Vakuumqualität, d.h. mit einem sinkenden Druck sämtliche Anforderungen an die Leitungsqualität sowie an die Qualität von Materialübergängen steigen. Die überwiegende Menge der in einem zu vakuumierenden Vakuumdämmkörper vorhandenen Gasmoleküle wird durch ein erstes Unterdrucksystem abgezogen, das aufgrund der geringeren Anforderungen an das zu erlangende Vakuum effizient ausgestaltet werden kann.

Demnach ist es möglich mit der Vorrichtung nach Anspruch 1 Vakuumdämmkörper parallel zueinander zu evakuieren, wobei gleichzeitig die Effektivität und die Ressourcenintensität, die hierbei vonnöten ist, im Vergleich zum Stand der Technik reduziert werden kann.

In einer weiteren Ausführungsform ist der zum ersten Druckniveau korrespondierende Druck höher als der zum zweiten Druckniveau korrespondierende Druck. Das heißt, das mit dem ersten Unterdrucksystem erzeugbare Vakuum ist weniger rein, als das mit dem zweiten Unterdrucksystem erzeugbare Vakuum. Mit dem zweiten Unterdrucksystem ist also ein reineres Vakuum erreichbar als mit dem ersten Unterdrucksystem.

In einer weiteren vorteilhaften Ausführungsform der Erfindung ist jeder Druckschalter eines Evakuierplatzes dazu ausgelegt, eine Umschaltung zwischen dem ersten Unterdrucksystem und dem zweiten Unterdrucksystem in Abhängigkeit eines Evakuierfortschritts eines an den jeweiligen Evakuierplatz zu evakuierenden Vakuumdämmkörpers vorzunehmen.

Vorzugsweise wird der Evakuierfortschritt mit Hilfe eines Sensors bestimmt, der in der Evakuierkopplung, der Evakuierleitung und/oder dem Druckschalter angeordnet sein kann. Eine Umschaltung erfolgt dann in Abhängigkeit der von dem Sensor erfassten Werte.

Dadurch wird eine größere Flexibilität bei der Erzeugung von Vakuumdämmkörpern erreicht. Diese begründet sich darauf, dass unabhängig von dem Zustand der parallel an den Evakuierplätzen befindlichen Vakuumdämmkörper der Druckschalter bei einem Erreichen eines gewissen Vakuumniveaus des zu evakuierenden Vakuumdämmkörpers umschaltet, damit mit Hilfe auf das umgeschaltete Unterdrucksystem ein gewünschtes Vakuumniveau in dem zu evakuierenden Vakuumdämmkörper erreicht wird. Es ist also nicht notwendig, dass alle parallel zu evakuierenden Vakuumdämmkörper gleichzeitig zwischen den verschiedenen Unterdrucksystemen umgeschaltet werden. So kann ein stetiger Produktionsfortschritt bei der Erzeugung der Vakuumdämmkörper erlangt werden.

In einer Ausführungsform umfasst die Vorrichtung Mittel zur Erfassung des Evakuierfortschritts in jedem zu evakuierenden Vakuumdämmkörper. So kann beispielsweise individuell für jeden Vakuumdämmkörper ein geeigneter Zeitpunkt zum Umschalten vom ersten auf das zweite Druckniveau bestimmt werden Geeignete Mittel umfassen einen Sensor zur Erfassung des Drucks in jedem zu evakuierenden Vakuumdämmkörper.

Darüber hinaus werden die Vorteile der Erfindung durch das Verfahren nach Anspruch 5 erlangt. In diesem Verfahren werden die mehreren Vakuumdämmkörper mit einer der vorstehend beschriebenen Vorrichtungen in einer parallelen Art und Weise evakuiert. Hierbei werden die mehreren Vakuumdämmkörper an eine jeweilige Evakuierkupplung zum Evakuieren des entsprechenden Vakuumdämmkörpers angeschlossen und jeder Evakuierplatz in Abhängigkeit eines Evakuierfortschritts des an dem Evakuierplatz zu evakuierenden Vakuumdämmkörpers zwischen den zwei verschiedenen Unterdrucksystemen, die Vakuuen mit verschiedenen Druckniveaus erzeugen können, umgeschaltet. Um ein gewünschtes Vakuum in dem Vakuumdämmkörper zu erreichen, wird also zuerst ein erstes Unterdrucksystem angelegt, das nach Erreichen eines gewissen Evakuierungsfortschritts durch ein zweites Unterdrucksystem ersetzt wird.

In einer weiteren Ausführungsform des Verfahrens werden die zu evakuierenden Vakuumdämmkörper zuerst mit Hilfe des ersten Unterdrucksystems evakuiert und nachfolgend mit Hilfe des zweiten Unterdrucksystems evakuiert. Hierbei ergeben sich Vorteile hinsichtlich der Dimensionierung der einzelnen Unterdrucksysteme. In einer Gesamtbetrachtung ist es vorteilhafter zwei verschiedene Unterdrucksysteme vorzusehen, die unterschiedlich reine Vakuumniveaus erreichen können, als ein einzelnes Unterdrucksystem zu implementieren, das das gewünschte Vakuumniveau umsetzen kann.

Vorzugsweise ist demnach das mit dem zweiten Unterdrucksystem zu erreichende Vakuum höher (reiner) als das mit dem ersten Unterdrucksystem.

In einer weiteren Ausführungsform des Verfahrens findet das Umschalten eines Druckschalters eines Evakuierplatzes von dem einen Unterdrucksystem auf das andere Unterdrucksystem unabhängig vom Zustand der Vakuumdämmkörper an einem anderen Evakuierplatz statt.

Indem keine Rücksicht auf den Evakuierungszustand an anderen Evakuierplätzen beim Umschalten von dem einen zu dem anderen Unterdrucksystem genommen wird, kann in einer kontinuierlichen Art und Weise eine Zuführung von noch nicht evakuierten Vakuumdämmkörpern zur Evakuierung erfolgen. Dies stellt einen bedeutenden Gewinn an Flexibilität dar. Ein solches Vorgehen ist in einem herkömmlichen Verfahren zur parallelen Evakuierung mehrerer Vakuumdämmkörper nur bedingt möglich, da die durch die nicht evakuierten Vakuumdämmkörper eingebrachte Gasmolekülmenge zu einer Verlängerung der Gesamtdauer der zur Evakuierung auf ein gewünschtes Vakuumniveau notwendigen Zeit geführt hätte. In dem, in dieser Anmeldung vorgeschlagenen, Aufbau verringert sich diese Zeitspanne auf einen vernachlässigbaren Wert.

Die zu vakuumierenden Vakuumdämmkörper umfassen eine Hochbarrierefolie. Dies ist eine diffusionsdichte Hülle.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10⁻⁵ mbar * l / s *m² und besonders bevorzugt < 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar * l / s * m² und besonders bevorzugt im Bereich von < 10⁻³ mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Des Weiteren betrifft die Erfindung ein Verfahren zur Herstellung eines wärmeisolierten Behältnisses, vorzugsweise eines Kühl- und/oder Gefriergerätes, wobei das Behältnis zwischen einer Außenwand und einer Innenwand wenigstens einen Vakuumdämmkörper aufweist. Der Vakuumdämmkörper wird dabei im Rahmen eines erfindungsgemäßen Verfahrens evakuiert.

In einer Ausführungsform umfasst das Behältnis dabei ein Vollvakuumsystem. Darunter ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Behältnisses, vorzugsweise Geräts und der Außenhaut des Behältnisses, vorzugsweise Gerätes, als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Behältnisses bzw. Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus und/oder zwischen der Innenseite und der Außenseite des Verschlusselementes, wie z.B. einer Tür, Klappe, Deckel oder dergleichen erstrecken.

Das Vollvakuumsystem kann so erhalten werden, dass die Umhüllung des jeweiligen Vakuumdämmkörpers mit einem Kernmaterial gefüllt und anschließend vakuumdicht versiegelt und im Rahmen des erfindungsgemäßen Verfahrens evakuiert wird. In einer Ausführungsform erfolgt sowohl das Befüllen als auch das vakuumdichte Versiegeln der Umhüllung bei Normal- bzw. Umgebungsdruck. Die Evakuierung im Rahmen des erfindungsgemäßen Verfahrens erfolgt dann, während außerhalb der Umhüllung Normal- bzw. Umgebungsdruck herrscht. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Der temperierte Innenraum ist je nach Art des Gerätes (Kühlgerät, Wärmeschrank etc.) entweder gekühlt oder beheizt. Wärmeisolierte Behältnisse im Sinne der vorliegenden Erfindung weisen mindestens einen temperierten Innenraum auf, wobei dieser gekühlt oder beheizt sein kann, so dass sich in dem Innenraum eine Temperatur unterhalb oder oberhalb der Umgebungstemperatur von z.B. 21 °C ergibt. Die Erfindung ist also nicht auf Kühl- und/oder Gefriergeräte beschränkt sondern betrifft allgemein Geräte mit einem temperierten Innenraum, beispielsweise auch Wärmeschränke oder Wärmetruhen.

In einer Ausführungsform ist vorgesehen, dass es sich bei dem erfindungsgemäßen Behältnis um ein Kühl- und/oder Gefriergerät, insbesondere um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

Vorzugsweise ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist denkbar, dass das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Betrieb mit Gleichspannung kann insbesondere dann zur Anwendung kommen, wenn das Behältnis eine thermoelektrische Wärmepumpe zum Temperieren des Innenraums aufweist.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

Weitere Einzelheiten und Vorteile der Erfindung werden anhand eines in der Zeichnung dargestellten Ausführungsbeispiels näher erläutert. Hierbei zeigt:

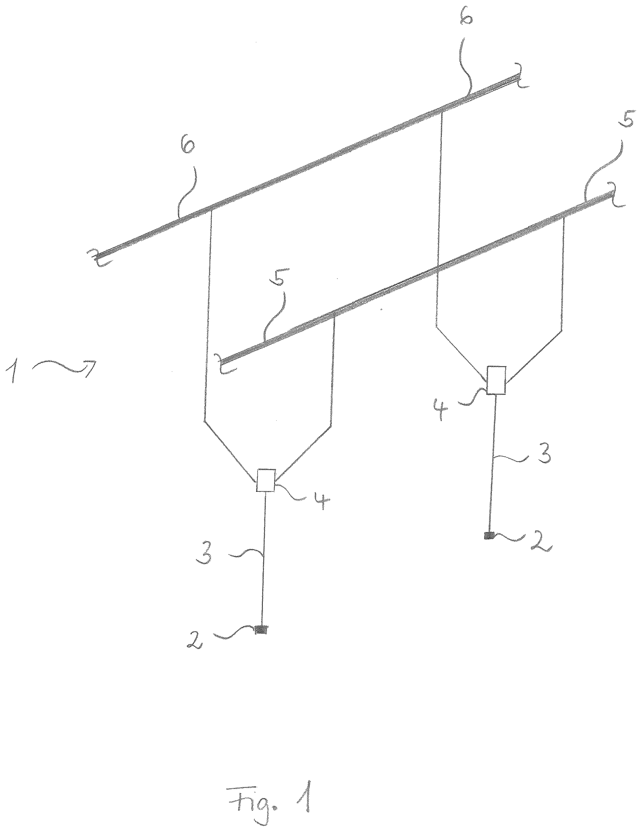

- Figur 1:: Einen schematischen Aufbau einer erfindungsgemäßen Vorrichtung zum parallelen Evakuieren mehrerer Vakuumdämmkörper.

In Figur 1 ist eine Vorrichtung 1 zum parallelen Evakuieren mehrerer Vakuumdämmkörper gezeigt. Zur besseren Übersichtlichkeit sind zwei der mehreren Evakuierplätze der Vorrichtung vollständig dargestellt. Jeder der Evakuierplätze enthält eine Evakuierkupplung 2, eine Evakuierleitung 3 und einen die Evakuierleitung mit einem ersten Unterdrucksystem 5 oder einem zweiten Unterdrucksystem 6 verbindenden Druckschalter 4.

Typischerweise wird ein zu vakuumierender Vakuumdämmkörper (nicht dargestellt) durch ein Aufsetzen der Evakuierkupplung 2 mit einem der beiden Unterdrucksystem 5, 6 evakuiert.

Die Erfindung umfasst auch den Einsatz von mehr als zwei Vakuumsystemen, welche bei fortlaufendem Evakuierfortschritt sequentiell zugeschaltet werden.

## Patentansprüche

1. Vorrichtung zum parallelen Evakuieren mehrerer Vakuumdämmkörper,
**gekennzeichnet durch:**
mehrere Evakuierplätze, wobei jeder der Evakuierplätze umfasst:
eine Evakuierkupplung (2) zum Aufsetzen auf einen Evakuierstutzen eines zu evakuierenden Vakuumdämmkörpers,
eine Evakuierleitung (3), die sich von der Evakuierkupplung (2) erstreckt, und
einen Druckschalter (4), der mit der Evakuierleitung (3) verbunden ist, ein erstes Unterdrucksystem (5), das mit den mehreren Druckschaltern (4) der mehreren Evakuierplätze verbunden ist und dazu fähig ist, ein Vakuum mit einem ersten Druckniveau zu erzeugen, und
ein zweites Unterdrucksystem (6), das mit den mehreren Druckschaltern (4) der mehreren Evakuierplätze verbunden ist und dazu fähig ist, ein Vakuum mit einem zu dem ersten Druckniveau verschiedenen zweiten Druckniveau zu erzeugen, wobei
jeder Druckschalter (4) eines Evakuierplatzes dazu ausgebildet ist, die Evakuierleitung zwischen dem ersten Unterdrucksystem (5) und dem zweiten Unterdrucksystem (6) umzuschalten.

2. Vorrichtung nach Anspruch 1, wobei der zum ersten Druckniveau korrespondierende Druck höher ist als der zum zweiten Druckniveau korrespondierende Druck.

3. Vorrichtung nach einem der vorhergehenden Ansprüche, wobei jeder Druckschalter (4) eines Evakuierplatzes dazu ausgelegt ist, eine Umschaltung zwischen dem ersten Unterdrucksystem (5) und dem zweiten Unterdrucksystem (6) in Abhängigkeit eines Evakuierfortschritts eines an dem jeweiligen Evakuierplatz zu evakuierenden Vakuumdämmkörpers vorzunehmen.

4. Vorrichtung nach einem der vorhergehenden Ansprüche, wobei die Vorrichtung Mittel zur Erfassung des Evakuierfortschritts in jedem zu evakuierenden Vakuumdämmkörper aufweist, vorzugsweise einen Sensor zur Erfassung des Drucks in jedem zu evakuierenden Vakuumdämmkörper.

5. Verfahren zum parallelen Evakuieren mehrerer Vakuumdämmkörper mit einer Vorrichtung nach einem der vorhergehenden Ansprüche, wobei:
mehrere Vakuumdämmkörper an eine jeweilige Evakuierkupplung (2) zum Evakuieren des entsprechenden Vakuumdämmkörpers angeschlossen werden, jeder Druckschalter (4) eines Evakuierplatzes in Abhängigkeit eines Evakuierfortschritts des an dem Evakuierplatz zu evakuierenden Vakuumdämmkörpers zwischen den zwei verschiedenen Unterdrucksystemen (5,6), die Vakuuen mit verschiedenen Druckniveaus erzeugen können, umgeschaltet wird.

6. Verfahren nach Anspruch 5, wobei die zu evakuierenden Vakuumdämmkörper zuerst mit Hilfe des ersten Unterdrucksystems (5) evakuiert werden und nachfolgend mit Hilfe des zweiten Unterdrucksystems (6) evakuiert werden.

7. Verfahren nach Anspruch 6, wobei das mit dem zweiten Unterdrucksystem (6) zu erreichende Vakuum höher ist als das mit dem ersten Unterdrucksystem (5).

8. Verfahren nach einem der Ansprüche 5 bis 7, wobei das Umschalten eines Druckschalters (4) eines Evakuierplatzes von dem einen Unterdrucksystem (5,6) auf das andere Unterdrucksystem (6,5) unabhängig vom Zustand der Vakuumdämmkörper an einem anderen Evakuierplatz erfolgt.

9. Verfahren zur Herstellung eines wärmeisolierten Behältnisses, vorzugsweise eines Kühl- und/oder Gefriergerätes, wobei das Behältnis zwischen einer Außenwand und einer Innenwand wenigstens einen Vakuumdämmkörper aufweist,
**dadurch gekennzeichnet,**
**dass** wobei der Vakuumdämmkörper durch eines Verfahrens nach einem der Ansprüche 5 bis 8 evakuiert wird.

## Claims

1. An apparatus for the parallel evacuation of a plurality of vacuum insulation bodies,
**characterized by:**
a plurality of evacuation positions, with each of the evacuation positions comprising:
an evacuation coupling (2) for placing onto an evacuation stub of a vacuum insulation body to be evacuated;
an evacuation line (3) that extends from the evacuation coupling (2); and
a push switch (4) that is connected to the evacuation line (3);
a first vacuum system (5) that is connected to the plurality of push switches (4) of the plurality of evacuation positions and that is able to generate a vacuum having a first pressure level; and
a second vacuum system (6) that is connected to the plurality of push switches (4) of the plurality of evacuation positions and that is able to generate a vacuum having a second pressure level different from the first pressure level; with
each push switch (4) of an evacuation position being configured to switch the evacuation line between the first vacuum system (5) and the second vacuum system (6).

2. An apparatus in accordance with claim 1, wherein the pressure corresponding to the first pressure level is higher than the pressure corresponding to the second pressure level.

3. An apparatus in accordance with one of the preceding claims, wherein each push switch (4) of an evacuation position is adapted to carry out a switchover between the first vacuum system (5) and the second vacuum system (6) in dependence on an evacuation progress of a vacuum insulation body to be evacuated at the respective evacuation position.

4. An apparatus in accordance with one of the preceding claims, wherein the apparatus has means for detecting the evacuation progress in every vacuum insulation body to be evacuated, preferably a sensor for detecting the pressure in every vacuum insulation body to be evacuated.

5. A method for the parallel evacuation of a plurality of vacuum insulation bodies using an apparatus in accordance with one of the preceding claims, wherein:
a plurality of vacuum insulation bodies are connected to a respective evacuation coupling (2) for evacuating the corresponding vacuum insulation body; every push switch (4) of an evacuation position is switched over in dependence on an evacuation progress of the vacuum insulation body to be evacuated at the evacuation position between the two different vacuum systems (5, 6) that can generate vacuums of different pressure levels.

6. A method in accordance with claim 5, wherein the vacuum insulating bodies to be evacuated are first evacuated with the aid of the first vacuum system (5) and are subsequently evacuated with the aid of the second vacuum system (6).

7. A method in accordance with claim 6, wherein the vacuum to be achieved using the second vacuum system (6) is higher than that using the first vacuum system (5).

8. A method in accordance with one of the claims 5 to 7, wherein the switching over of a push switch (4) of an evacuation position from the one vacuum system (5, 6) to the other vacuum system (6, 5) takes place independently of the state of the vacuum insulating bodies at a different evacuation position.

9. A method of manufacturing a thermally insulated container, preferably a refrigerator unit and/or freezer unit, wherein the container has at least one vacuum insulation body between an outer wall and an inner wall,
**characterized in that**
the vacuum insulation body is evacuated by a method in accordance with one of the claims 5 to 8.

## Revendications

1. Dispositif d'évacuation parallèle de l'air de plusieurs corps d'isolation par le vide,
**caractérisé par** :
plusieurs emplacements d'évacuation de l'air, chaque emplacement d'évacuation de l'air comprenant :
un dispositif d'accouplement d'évacuation de l'air (2) destiné à être placé sur une tubulure d'évacuation de l'air d'un corps d'isolation par le vide dont l'air est à évacuer,
une conduite d'évacuation de l'air (3), qui s'étend à partir du dispositif d'accouplement d'évacuation de l'air (2), et
un interrupteur manométrique (4), qui est relié à la conduite d'évacuation de l'air (3),
un premier système de dépression (5), qui est relié aux plusieurs interrupteurs manométriques (4) des plusieurs emplacements d'évacuation de l'air et qui est apte à produire un vide à un premier niveau de pression, et
un second système de dépression (6), qui est relié aux plusieurs interrupteurs manométriques (4) des plusieurs emplacements d'évacuation de l'air et qui est apte à produire un vide à un second niveau de pression différent du premier niveau de pression,
chaque interrupteur manométrique (4) d'un emplacement d'évacuation de l'air étant conçu pour commuter la conduite d'évacuation de l'air entre le premier système de dépression (5) et le second système de dépression (6).

2. Dispositif selon la revendication 1, dans lequel la pression correspondant au premier niveau de pression est supérieure à la pression correspondant au second niveau de pression.

3. Dispositif selon l'une des revendications précédentes, dans lequel chaque interrupteur manométrique (4) d'un emplacement d'évacuation de l'air est conçu pour effectuer une commutation entre le premier système de dépression (5) et le second système de dépression (6) en fonction d'une progression de l'évacuation de l'air d'un corps d'isolation par le vide dont l'air est à évacuer sur l'emplacement respectif d'évacuation de l'air.

4. Dispositif selon l'une des revendications précédentes, dans lequel le dispositif comporte des moyens de détection de la progression de l'évacuation de l'air dans chaque corps d'isolation par le vide dont l'air est à évacuer, de préférence un capteur destiné à détecter la pression dans chaque corps d'isolation par le vide dont l'air est à évacuer.

5. Procédé d'évacuation parallèle de l'air de plusieurs corps d'isolation par le vide au moyen d'un dispositif selon l'une des revendications précédentes, dans lequel : plusieurs corps d'isolation par le vide sont raccordés à un dispositif d'accouplement d'évacuation de l'air (2) respectif pour évacuer l'air du corps d'isolation par le vide correspondant, chaque interrupteur manométrique (4) d'un emplacement d'évacuation de l'air est commuté entre les deux systèmes de dépression (5, 6) différents, qui peuvent produire du vide à différents niveaux de pression, en fonction d'une progression de l'évacuation de l'air du corps d'isolation par le vide dont l'air est à évacuer sur l'emplacement d'évacuation de l'air.

6. Procédé selon la revendication 5, dans lequel l'air des corps d'isolation par le vide dont l'air est à évacuer est d'abord évacué à l'aide du premier système de dépression (5) puis à l'aide du second système de dépression (6).

7. Procédé selon la revendication 6, dans lequel le niveau de vide à obtenir avec le second système de dépression (6) est supérieur à celui à obtenir avec le premier système de dépression (5).

8. Procédé selon l'une des revendications 5 à 7, dans lequel la commutation d'un interrupteur manométrique (4) d'un emplacement d'évacuation de l'air d'un système de dépression (5, 6) à l'autre système de dépression (6, 5) est effectuée indépendamment de l'état des corps d'isolation par le vide à un autre emplacement d'évacuation de l'air.

9. Procédé de fabrication d'un contenant isolé thermiquement, de préférence d'un appareil de réfrigération et/ou de congélation, dans lequel le contenant comporte au moins un corps d'isolation par le vide entre une paroi extérieure et une paroi intérieure,
**caractérisé en ce que**
l'air du corps d'isolation par le vide est évacué par un procédé selon l'une des revendications 5 à 8.
